# EUROPEAN PATENT SPECIFICATION

(11) **EP 0 467 995 B1**
(45) Date of publication and mention of the grant of the patent: **06.07.1994**
(21) Application number: 90908100.2
(22) Date of filing: 17.04.1990
(51) Int. Cl.: B08B 15/04, F16L 27/08

(54) **AN ARRANGEMENT IN FUME EXTRACTION ARMS**
ANORDNUNG IN RAUCHEXTRAKTIONSRÖHREN
AGENCEMENT POUR TUYAUX D'EXTRACTION DE FUMEE

(30) Priority: 13.04.1989 SE 8901331
(43) Date of publication of application: 29.01.1992
(73) Proprietor: J H PLYMOTH AB, 211 24 Malmö (SE)
(72) Inventor: HOLMGREN, Ambjörn, S-921 00 Lycksele (SE)
(74) Representative: Franzén, Lars Hjalmar
(86) International application number: SE9000254
(87) International publication number: WO9011845

(56) References cited:
- GB-A- 512 175
- SE-B- 424 409

## Description

The subject invention concerns generally, an arrangement in fume extraction arms and more precisely an external middle joint for an extraction arm according to the first part of the single independent claim. Such a joint is known from SE-B-424 409.

One problem found in bolt connections comprising a movable joint is that in general they have an inherent tendency to unscrew automatically. If brake linings are used in the joint to maintain the friction at a constant level (constant joint movability), such unscrewing of the bolts of the joint must not occur since this would mean loss of the joint function.

One common method of solving this problem is to mount two needle bearings on each bolt connection in order to prevent self-unscrewing tendencies. This arrangement cannot, however, provide full security because of the difficulty in supplying lubrication to the bearings, with the result that the latter may seize and cause looseness in the joint.

In order to eliminate this problem the subject invention proposes a novel and simple, yet efficient means, according to the characterising features of the patent claim.

The invention will be described in closer detail in the following with reference to the accompanying drawings, wherein:
FIG. 1 illustrates an almost complete extraction arm in a perspective view from above, provided with a middle joint in accordance with the invention; and
FIG. 2 illustrates the middle joint in accordance with the invention separately in a perspective view obliquely from below.

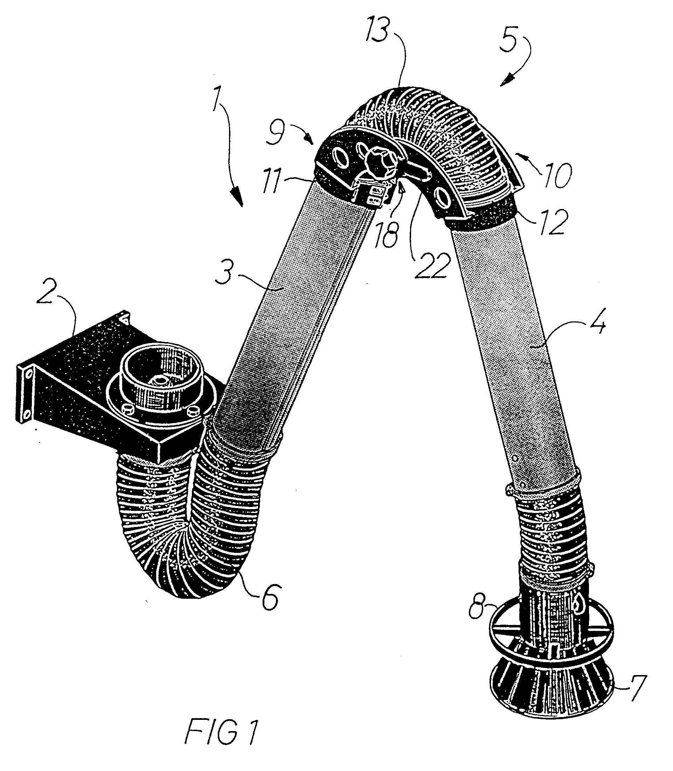

The extraction arm illustrated in FIG. 1 and generally designated by numeral reference 1 is primarily intended for localized extraction of fumes, gas, oil mists and similar exhaust fumes. The main components of the extraction arm is a wall attachment 2 on which is mounted a motor-operated extraction fan, not shown. The arm 1 further comprises an inner arm 3 and an outer arm 4 made from smooth metal tubing and the arms 3, 4 are interconnected by means of a middle joint in accordance with the invention, generally designated by numeral reference 5. A flexible tube 6 extends between the inner arm 3 and the attachement 2 and at the free end of the outer arm 4 there is provided an extraction hood 7 and a ring-shaped operating handle 8 by means of which the extraction hood 7 and consequently the entire extraction arm assembly may be moved to the desired position.

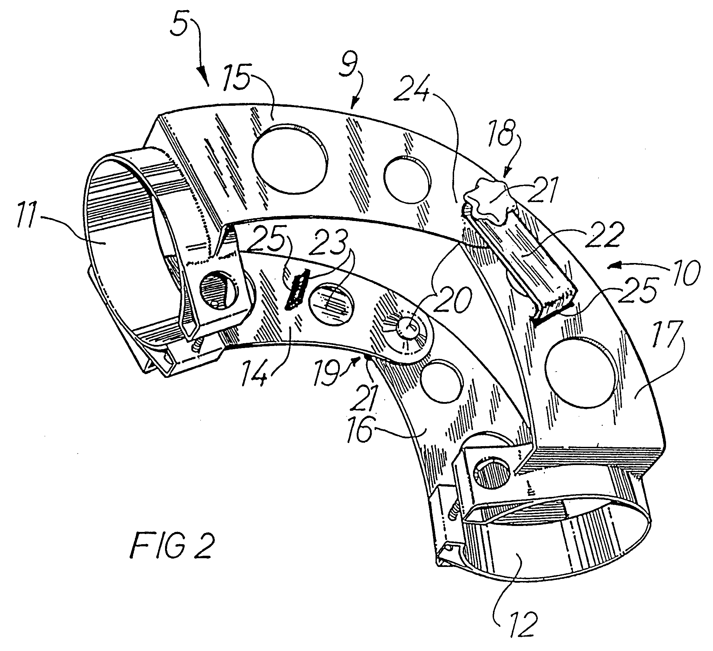

The middle joint 5 illustrated in closer detail in FIG. 2 is of the external type, i.e. it is positioned externally of the inner and outer arms 3 and 4 and it comprises two essentially identical halves 9 and 10 which in accordance with the embodiment illustrated are made from sheet metal. One of the joint halves 9 is connected to the outer end of the tubular inner arm 3 whereas the other joint half 10 is connected to the inner end of the tubular outer arm 4, more precisely with the aid of connecting pieces 11, 12 designed to be applied in a tight position about their respective arm end. A flexible piece of hose 13, see FIG. 1 extends between the two arm ends, whereby a continous fume extraction channel is formed, extending from the extraction hood 7 to the suction fan, not shown.

Each joint half 9 and 10 is formed with two leg members 14, 15 and 16, 17, respectively, which project from the associated connection piece 11 and 12 so as to extend on either side of the piece of hose 13. In accordance with the embodiment illustrated in the drawings the leg members are formed from flat sheet metal plates having through-holes formed therein and they have an arcuate configuration, tapering towards their free ends. At its outer free ends each leg member 14, 15 and 16, 17, respectively, is articulated to a corresponding leg member of the other joint half by means of bolt connections 18 and 19 to be described in closer detail in the following.

In accordance with the embodiment illustrated in the drawings, these bolt connections 18, 19 consist of a bolt 20 which is non-rotationally attached to one of the leg members 14 and 17, respectively, of each joint half 9 and 10. The bolts 20 extend with some play through the opposite leg member 16 and 15, respectively, of the other joint half 10 and 9, respectively, and at their free ends they support a knob 21 which is screwed onto an associated bolt 20.

In accordance with an alternative embodiment, not illustrated, the bolt connections which consist of bolts corresponding to bolts 20 and which are non-rotationally mounted in both leg members 14 and 15 or 16 and 17 of one of the joint halves 9 or 10. These bolts extend with some play through the two leg members 16, 17 or 14, 15 of the other joint half 10 or 9 and at their free ends these bolts support a knob corresponding to knob 21 which is threaded onto its associated bolt.

In accordance with both embodiments the bolts 20 are carriage bolts which are non-rotationally mounted in square apertures, not shown, which are formed in the leg members. The knobs 21 on these bolts 20 preferably are in the shape of wheels formed with hand gripping surfaces.

As appears from the drawings, a driving member 22 and 23 is mounted intermediate the associated knob 21 and that face 24 of the adjacent leg member which is turned towards said driving members, in accordance with drawing figure 2 leg member 15 and leg member 16. Each knob 21 may be screwed towards or from its associated one of driving members 22 and 23 to adjust the movability of the middle joint 5 and each driving member 22 and 23 is anchored in the leg member - in accordance with figure 2 leg member 17 and 14 - to which the bolt 20 is non-rotationally attached. Upon angular movements of the middle joint 5, the driving members 22, 23 and consequently the knobs 21 thus will be imparted a movement identical to that of the associated bolt 20, whereby automatic unscrewing movements of the bolt connections 18 and 19 are prevented. The bolt connections as such thus will behave as if they were screwed into one single plate instead of to a movable middle joint.

In accordance with the embodiment illustrated in the drawings the driving members are in the shape of elongate plates which are formed at one of their ends with an aperture, not shown, for application of this plate end onto the associated bolt 20 intermediate the knob 21 and the leg member face 24 mentioned above, whereas the opposite plate end is bent inwards and is inserted in a slot 25 formed in the leg member, as explained in the aforegoing either leg member 17 or 14, in which the bolts 20 are non-rotationally mounted.

## Claims

1. An external adjustable middle joint (5) for an extraction arm (1), said middle joint comprising two halves (9, 10), one (9) of which is connected to one end of an inner tubular arm (3) and the other half (10) of which is connected to one end of an outer tubular arm (4) by means of their respective one of connection pieces (11, 12), a length of flexible hose (13) extending between and interconnecting said ends of the tubular arms (3, 4), each joint half (9, 10) having two leg members (14, 15 and 16, 17, respectively) projecting from the corresponding arm connection piece (11, 12) so as to extend alongside the length of hose (13) on either side thereof, the outer free ends of the leg members of one joint half (9 or 10) being articulated to the corresponding opposite outer free ends of the leg members of the other joint half (9 or 10) by means of bolt connections (18, 19) comprising either a bolt (20) which is non-rotationally mounted in one (14 and 17, respectively) of the two leg members of each joint half (9, 10) and which with play extends through the opposite one of the two leg members (16 and 15, respectively) of the other half (10 and 9, respectively) of the joint and which bolt supports at its outer free end a tightening means (21) which is threaded onto said bolt, or bolts (20) which are non-rotationally mounted in both leg members (14, 15) of one of the joint halves (9 or 10) and with play extend through the two leg members (16, 17 or 14, 15) of the opposite joint half (10 or 9), each bolt supporting at its outer free end a tightening means (21) which is threaded onto said bolt, a driving member (22 and 23, respectively) being mounted in a position intermediate the corresponding tightening means (21) and the face (24) of the adjacent leg member (15 and 16, respectively) that is turned towards said driving member (22 and 23, respectively), said tightening means (21) being arranged to be screwed into a position against said driving member (21) in order to adjust the movability of the middle joint (5), **characterized** in that both leg members (14, 15 and 16, 17) of both joint halves (9, 10) are made from flat sheet metal plates having an arcuate configuration tapering towards the outer free ends of the leg members, in that the tightening means are in the form of wheels (21) having gripping surfaces thereon, and in that the driving members (22, 23) are anchored in those leg members (17 and 14, respectively) in which the bolts in the form of carriage bolts (20) are non-rotationally mounted in square apertures formed in said one leg member of each joint half (9, 10), said driving members being in the form of elongate plates which are formed at one of their ends with an aperture for application on the associated carriage bolt (20) in a position intermediate the wheel (21) and said face (24), and which plates are bent at their opposite end and inserted by means of said end in their respectively one of slits (25) formed in the leg members (17 and 14, respectively) in which the carriage bolts (20) are non-rotationally mounted, whereby upon pivotal movement of the middle joint (5) said driving members (22, 23) and consequently the wheels (21) will be given a motion identical with that of the associated carriage bolts (20), thus preventing the inherent unscrewing tendency of the bolt connections (18, 19).

## Patentansprüche

1. Äußeres, einstellbares mittleres Gelenk (5) für einen Abzugsarm (1), das zwei Hälften (9, 10) umfaßt, von denen eine (9) mit einem Ende eines inneren röhrenförmigen Arms (3) und die andere Hälfte (10) mit einem Ende eines äußeren röhrenförmigen Arms (4) über ihre jeweiligen Verbindungsstücke (11, 12) verbunden sind, sowie ein Stück flexiblen Schlauchs (13), der sich zwischen den Enden der röhrenförmigen Arme (3, 4) erstreckt und sie verbindet, wobei jede Gelenkhälfte (9, 10) zwei Schenkelglieder (14, 15 bzw. 16, 17) aufweist, die aus dem entsprechenden Verbindungsstück (11, 12) des Arms herausragen, so daß sie sich an beiden Seiten des Schlauchs (13) über dessen Länge hinweg erstrecken, und wobei die äußeren freien Enden der Schenkelglieder einer Gelenkhälfte (9 oder 10) an den entsprechenden gegenüberliegenden äußeren freien Enden der Schenkelglieder der anderen Gelenkhälfte (9 oder 10) mittels Schraubenverbindungen (18, 19) angelenkt sind, welche entweder eine Schraube (20) umfassen, die drehfest in einem (14 bzw. 17) der beiden Schenkelglieder jeder Gelenkhälfte (9, 10) befestigt ist und die sich mit Spiel durch das gegenüberliegende der beiden Schenkelglieder (16 bzw. 15) der anderen Hälfte (10 bzw. 9) des Gelenks erstreckt und an ihrem äußeren freien Ende ein Spannmittel (21) trägt, das auf die Schraube aufgeschraubt ist, oder Schrauben (20), die drehfest in beiden Schenkelgliedern (14, 15) einer der Gelenkhälften (9 oder 10) befestigt sind und sich mit Spiel durch die beiden Schenkelglieder (16, 17 oder 14, 15) der gegenüberliegenden Gelenkhälfte (10 oder 9) erstrecken, wobei jede Schraube an ihrem äußeren freien Ende ein Spannmittel (21) trägt, das auf die Schraube aufgeschraubt ist, wobei ein Antriebsglied (22 bzw. 23) an einer zwischen dem entsprechenden Spannmittel (21) und der Fläche (24) des benachbarten Schenkelglieds (15 bzw. 16) liegenden Stelle befestigt ist, die dem Antriebsglied (22 bzw. 23) zugewandt ist, wobei das Spannmittel (21) so angeordnet ist, daß es in eine Stellung gegen das Antriebsglied (21) geschraubt werden kann, um die Beweglichkeit des mittleren Gelenks (5) einzustellen, dadurch gekennzeichnet, daß beide Schenkelglieder (14, 15 und 16, 17) beider Gelenkhälften (9, 10) aus flachen Blechplatten bestehen, die eine sich zu den äußeren freien Enden der Schenkelglieder verjüngende, bogenförmige Konfiguration aufweisen, daß die Spannmittel in Form von Rädern (21) mit daran ausgebildeten Griffflächen vorliegen, und dadurch, daß die Antriebsglieder (22, 23) in denjenigen Schenkelgliedern (17 bzw. 14) verankert sind, in denen die Schrauben in Form von Schloßschrauben (20) in in dem einen Schenkelglied jeder Gelenkhälfte (9, 10) ausgebildeten viereckigen Öffnungen drehfest befestigt sind, wobei die Antriebsglieder in Form von länglichen Platten vorliegen, die an einem ihrer Enden mit einer Öffnung zum Anbringen an der zugehörigen Schloßschraube (20) an einer zwischen dem Rad (21) und der Fläche (24) liegenden Stelle versehen sind, und die an ihrem gegenüberliegenden Ende gebogen und mittels dieses Endes in ihrem jeweils zugeordneten der Schlitze (25) eingesetzt sind, die in den Schenkelgliedern (17 bzw. 14), in denen die Schloßschrauben (20) drehfest befestigt sind, ausgebildet sind, wodurch bei Schwenkbewegung des mittleren Gelenks (5) die Antriebsglieder (22, 23) und folglich die Räder (21) mit einer Bewegung beaufschlagt werden, die gleich der der zugehörigen Schloßschrauben (20) ist, und somit die den Schraubenverbindungen (18, 19) innewohnende Neigung, sich zu lösen, verhindert wird.

## Revendications

1. Raccord médian externe réglable (5) pour un bras d'aspiration (1), ledit raccord médian comprenant deux moitiés (9, 10) dont l'une (9) est reliée à une extrémité d'un bras tubulaire interne (3) et dont l'autre moitié (10) est reliée à une extrémité d'un bras tubulaire externe (4) au moyen de leurs tubulures respectives (11, 12), une longueur de tuyau flexible (13) s'étendant entre lesdites extrémités des bras tubulaires (3, 4) tout en les reliant mutuellement, chaque moitié de raccord (9, 10) comportant deux éléments de pattes (14, 15 et 16, 17, respectivement) faisant saillie depuis la tubulure de bras correspondante (11, 12) de façon à s'étendre sur la longueur du tuyau flexible (13) de part et d'autre de ce dernier, les extrémités externes libres des éléments de pattes d'une moitié de raccord (9 ou 10) étant articulées aux extrémités externes libres opposées correspondantes des éléments de pattes de l'autre moitié de raccord (9 ou 10) au moyen de liaisons par boulons (18, 19) comprenant, soit un boulon (20) qui est monté de manière non rotative dans un des éléments de pattes (14 et 17, respectivement) des deux éléments de pattes de chaque moitié de raccord (9, 10) et qui s'étend avec du jeu à travers l'élément de patte opposé (16 et 15, respectivement) des deux éléments de pattes de l'autre moitié (10 et 9, respectivement) du raccord, ledit boulon supportant, à son extrémité externe libre, un moyen de serrage (21) qui est vissé sur ledit boulon, soit des boulons (20) qui sont montés de manière non rotative dans les deux éléments de pattes (14, 15) d'une des moitiés de raccord (9 ou 10) en s'étendant avec du jeu à travers les deux éléments de pattes (16, 17) ou (14, 15) de la moitié de raccord opposée (10 ou 9), chaque boulon supportant, à son extrémité libre externe, un moyen de serrage (21) qui est vissé sur ledit boulon, un élément d'entraînement (22 et 23, respectivement) étant monté dans une position intermédiaire entre le moyen de serrage correspondant (21) et la face (24) de l'élément de patte adjacent (15 et 16, respectivement) qui est orienté vers ledit élément d'entraînement (22 et 23, respectivement), ledit moyen de serrage (21) étant arrangé pour être vissé dans une position contre ledit élément d'entraînement (21) dans le but de régler la mobilité du raccord médian (5), caractérisé en ce que les deux éléments de pattes (14, 15) et (16, 17) des deux moitiés de raccord (9, 10) sont réalisés à partir de feuilles métalliques plates dont la configuration arquée se rétrécit en direction des extrémités libres externes des éléments de pattes, en ce que les moyens de serrage ont la forme de roues (21) comportant des surfaces de préhension, et en ce que les moyens d'entraînement (22, 23) sont ancrés dans les éléments de pattes (17 et 14, respectivement) dans lesquels les boulons, sous la forme de boulons (20) à tête bombée et collet carré, sont montés de manière non rotative dans des ouvertures carrées pratiquées dans ledit élément de patte de chaque moitié de raccord (9, 10), lesdits éléments d'entraînement ayant la forme de plaques allongées dans une des extrémités desquelles est pratiquée une ouverture pour venir s'appliquer sur le bouton associé (20) à tête bombée et collet carré dans une position intermédiaire entre la roue (21) et ladite face (24), lesdites plaques étant pliées à leur extrémité opposée et insérées au moyen de ladite extrémité dans une de leurs fentes respectives (25) pratiquées dans les éléments de pattes (17 et 14, respectivement) dans lesquels sont montés d'une manière non rotative les boulons (20) à tête bombée et collet carré, par lequel, lors du mouvement pivotant du raccord médian (5), lesdits éléments d'entraînement (22, 23) et, par conséquent, les roues (21) seront animés d'un mouvement identique à celui des boulons associés (20) à tête bombée et collet carré, empêchant ainsi la tendance inhérente au dévissage manifestée par les liaisons à boulons (18, 19).
